# EUROPÄISCHE PATENTSCHRIFT

(11) **EP 3 646 403 B1**
(45) Veröffentlichungstag und Bekanntmachung des Hinweises auf die Patenterteilung: **03.08.2022**
(21) Anmeldenummer: 18742392.6
(22) Anmeldetag: 26.06.2018
(51) Int. Cl.: H01M 8/0612, H01M 8/04225, H01M 8/12

(54) **VERFAHREN ZUM BETRIEB EINES SOFC-SYSTEMS UNTER ZUFÜHRUNG VON LUFT IN EINER STARTPHASE**
METHOD FOR OPERATING AN SOFC SYSTEM WITH A SUPPLY OF AIR IN A STARTING PHASE
PROCÉDÉ PERMETTANT DE FAIRE FONCTIONNER UN SYSTÈME SOFC AVEC INTRODUCTION D'AIR DANS UNE PHASE DE DÉMARRAGE

(30) Priorität: 26.06.2017 AT 505232017
(43) Veröffentlichungstag der Anmeldung: 06.05.2020
(73) Patentinhaber: AVL List GmbH, 8020 Graz (AT)
(72) Erfinder: REITER, Bernd, 8010 Kainbach bei Graz (AT); STEINER, Sepp, 8045 Graz (AT); MAHLER, Susanne, 8101 Gratkorn (AT); ZEIRINGER, Ralf, 8076 Vasoldsberg (AT); HOFER, Marlies, 8020 Graz (AT); REISSIG, Michael, 9020 Klagenfurt (AT); MATHÉ, Jörg, 8020 Graz (AT); LAWLOR, Vincent, 8054 Graz (AT)
(74) Vertreter: Mathys & Squire
(86) Internationale Anmeldenummer: PCT/AT2018/060128
(87) Internationale Veröffentlichungsnummer: WO 2019/000006

(56) Entgegenhaltungen:
- EP-A1- 2 233 431
- EP-A2- 1 188 712
- EP-A2- 2 044 644
- DE-A1- 10 350 318

## Beschreibung

Die vorliegende Erfindung betrifft ein Verfahren zum Betrieb eines SOFC-Systems. Die Erfindung betrifft ferner ein Computerprogrammprodukt zum Steuern und/oder Regeln eines SOFC-Systems zur Herstellung von Wasserstoff unter Verwendung von Wasser und einem kohlenstoffhaltigen Brennstoff, ein Speichermittel mit einem darauf gespeicherten Computerprogrammprodukt, ein SOFC-System zur Verwendung in einem Kraftfahrzeug sowie ein Kraftfahrzeug mit einem SOFC-System zur Bereitstellung elektrischer und eine Speichereinheit zur Energieversorgung eines Elektromotors des Kraftfahrzeugs.

Im Stand der Technik sind verschiedene Reformierungsverfahren zur Herstellung von Wasserstoff unter Verwendung von Wasser bzw. Wasserdampf und kohlenstoffhaltigen Brennstoffen in einem SOFC-System bekannt. Das momentan effektivste Verfahren zur Herstellung von Wasserstoff aus kohlenstoffhaltigen Energieträgern und Wasser ist dabei die Dampfreformierung. Diese wird zwar hauptsächlich großindustriell eingesetzt, findet mittlerweile jedoch auch immer häufiger im mobilen Einsatz Verwendung. Klassischerweise wird einem Verdampfer des SOFC-System zu Beginn der Dampfreformierung Wasser und Brennstoff in jeweils einem flüssigen Zustand zugeführt, wobei das Wasser üblicherweise durch Rezirkulation aus dem Brennstoffzellensystem selbst gewonnen wird. Das Wasser und der Brennstoff werden im Brennstoffzellensystem, insbesondere in einem Verdampfer, also zumindest bereits teilweise gasförmig, miteinander vermischt. Aufgrund der unterschiedlichen Siedepunkte des Wassers und des Brennstoffs findet während einer Verdampfung des Wasser-Brennstoff-Gemisches eine Änderung eines Brennstoff-Wasser-Verhältnisses statt, d. h. ein Teil des nun vorhandenen Wasser-Brennstoff-Gemisches weist in einer flüssigen Phase einen anderes Verhältnis zueinander auf als in der gasförmigen Phase. In einer Gasphase verändert sich deshalb die Gaszusammensetzung dahin gehend, dass in einer anschließenden Erhitzungsphase eine verstärkte Rußbildung auftritt, da die veränderten Verhältnisse zu einem unterschiedlichen Verhalten in einem Erhitzer führen. Die Rußbildung gilt es jedoch möglichst zu verhindern oder zu reduzieren.

Eine Möglichkeit, der vorstehend erwähnten Problematik hinsichtlich der Rußbildung Rechnung zu tragen ist es, das Wasser und den Brennstoff an einem unterschiedlichen Zeitpunkt im Verdampfer zu verdampfen oder einen Brennstoff, welcher einen geringeren Siedepunkt als Wasser aufweisen kann, erst zu einem späteren Zeitpunkt dem Verdampfer zuzuführen. Dies erfordert allerdings auch einen höheren steuer- und regelungstechnischen Aufwand sowie einen komplexeren Aufbau um den Verdampfer herum. Eine weitere Möglichkeit zur Vermeidung oder Reduzierung der Rußbildung ist es, einen Wasseranteil im Wasser-Brennstoff-Gemisch so zu erhöhen, dass eine Rußbildung verhindert oder zumindest stark reduziert werden kann. Dies hat jedoch den Nachteil, dass bei Verwendung eines solchen Wasser-Brennstoff-Gemisches relativ viel Energie für die Verdampfung benötigt wird und das SOFC-System nur entsprechend ineffizient betrieben werden kann. Darüber hinaus befindet sich in diesem Fall relativ viel Wasser im SOFC-System. Dies führt zu einem relativ hohen Gewicht des SOFC-Systems bzw. eines Kraftfahrzeugs, in welchem sich das SOFC-System beispielsweise befindet. Das Gewicht sollte jedoch insbesondere im mobilen Einsatz stets möglichst gering gehalten werden.

EP 1 188 712 A2 und DE 103 50 318 A1 offenbaren ein Verfahren zum Betrieb eines SOFC-Systems.

Aufgabe der vorliegenden Erfindung ist es, die voranstehend beschriebenen Nachteile zumindest teilweise zu beheben. Insbesondere ist es Aufgabe der vorliegenden Erfindung, ein Verfahren, ein Computerprogrammprodukt, ein Speichermittel, ein SOFC-System sowie ein Kraftfahrzeug zur Verfügung zu stellen, mit welchen bzw. in welchem aus einem Wasser-Brennstoff-Gemisch auf einfache Weise Wasserstoff herstellbar ist, wobei eine Rußbildung möglichst verhindert oder zumindest reduziert wird.

Die voranstehende Aufgabe wird durch die Patentansprüche gelöst. Insbesondere wird die voranstehende Aufgabe durch das Verfahren gemäß Anspruch 1, das Computerprogrammprodukt gemäß Anspruch 9, das Speichermittel gemäß Anspruch 10, das SOFC-System gemäß Anspruch 11 sowie das Kraftfahrzeug gemäß Anspruch 13 gelöst. Weitere Vorteile der Erfindung ergeben sich aus den Unteransprüchen, der Beschreibung und den Zeichnungen. Dabei gelten Merkmale und Details, die im Zusammenhang mit dem Verfahren beschrieben sind, selbstverständlich auch im Zusammenhang mit dem erfindungsgemäßen Computerprogrammprodukt, dem erfindungsgemäßen Speichermittel, dem erfindungsgemäßen SOFC-System, dem erfindungsgemäßen Kraftfahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der vorliegenden Erfindung wird ein Verfahren zum Betrieb eines SOFC-Systems zur Verfügung gestellt. Das Verfahren weist die folgenden Schritte auf, welche bei einer Startphase eines Reformerbetriebs des SOFC-Systems durchgeführt werden:
- Zuführen eines sauerstoffhaltigen Fluids in das SOFC-System,- Zuführen eines Wasser-Brennstoff-Gemisches in einen Verdampfer des SOFC-Systems,
- Ausführen eines Verdampfungsvorgangs zum Verdampfen des Wasser-Brennstoff-Gemisches, und
- Beimengen des sauerstoffhaltigen Fluids zum Verdampfungsvorgang sobald das Wasser und der Brennstoff gasförmig sind.

Im Rahmen der vorliegenden Erfindung wurde überraschenderweise festgestellt, dass es trotz einer eingangs erwähnten Beimengung von Wasser bzw. Erhöhung eines Wasseranteils im Wasser-Brennstoff-Gemisch noch immer zu einer Rußbildung im SOFC-System (Festoxidbrennstoffzellensystem), insbesondere in einem Überhitzer, kommt. Dabei wurde erkannt, dass diese Rußbildung während einer Startphase des Reformierungsprozesses des SOFC-Systems auftritt. Während dieser Startphase reicht eine Beimengung von Wasser überraschenderweise nicht aus, um eine Rußbildung zu reduzieren, insbesondere zu vermeiden. Es wurde herausgefunden, dass die Zufuhr eines sauerstoffhaltigen Fluids zum Verdampfungsvorgang des Wasser-Brennstoff-Gemisches Rußbildung verhindert oder zumindest stark reduziert. Ein weiterer Vorteil des vorliegenden Verfahrens ist es, dass durch die verringerte oder vermiedene Rußbildung auf eine Regeneration einer Brennstoffzelle im SOFC-System verzichtet werden kann, bei welcher Bauteile im SOFC-System hoch belastet werden. Darüber hinaus sind auch die mit einer Erhöhung einer Wasseranteils verbundenen Nachteile vermieden.

Von entscheidender Bedeutung im Rahmen der vorliegenden Erfindung war die überraschende Erkenntnis, dass die Zugabe des sauerstoffhaltigen Fluids zu dem vorliegenden Wasser-Brennstoff-Gemisch, also einem Zwei-Phasen-Gemisch, zu den vorstehend genannten vorteilhaften Effekten führt. Das Wasser-Brennstoff-Gemisch kann als ein Zwei-Phasen-Brennstoff verstanden werden, wobei die erste Phase Wasser und die zweite Phase der Brennstoff bzw. der reine Brennstoff ist. Das Wasser-Brennstoff-Gemisch umfasst günstigerweise etwa 45 % Brennstoff und etwa 55 % Wasser. Durch die Verwendung eines bereits vorgemischten Wasser-Brennstoff-Gemisches werden die eingangs angeführten Nachteile einer getrennten Einführung von Wasser und Brennstoff vermieden. Darüber hinaus müssen keine besonderen Anforderungen an den Verdampfer gestellt werde - ein gebräuchlicher Verdampfer kann verwendet werden, da das Wasser und der Brennstoff bereits in einer flüssigen Phase vermischt sind.

Das sauerstoffhaltige Fluid wird dem SOFC-System also zeitlich vor einem Zuführen des Wasser-Brennstoff-Gemisches oder zeitgleich mit diesem zugeführt. Örtlich erfolgt das Zuführen jedoch insbesondere erst wenn das Wasser-Brennstoff-Gemisch gasförmig ist, das heißt insbesondere erst stromabwärts des Verdampfers. Das sauerstoffhaltige Fluid kann jedoch auch direkt dem Verdampfer zugeführt werden. Unter Beimengen des sauerstoffhaltigen Fluids zum Verdampfungsvorgang kann im Rahmen der Erfindung insbesondere ein Vermischen des sauerstoffhaltigen Fluids mit dem Wasser-Brennstoff-Gemisch verstanden werden. Wird das sauerstoffhaltige Fluid dem Verdampfer zugeführt, ist es günstig wenn dieser Schritt etwa zeitgleich mit oder vor einem Zuführen des Wasser-Brennstoff-Gemisches zum Verdampfer erfolgt.

Unter dem Wasser kann vorliegend Wasser in flüssiger Form oder Wasser als Wasserdampf verstanden werden. Unter dem kohlenstoffhaltigen Brennstoff ist vorzugsweise ein kohlenwasserstoffhaltiger Brennstoff, insbesondere Ethanol zu verstehen.

Unter dem Verdampfungsvorgang ist im Rahmen der Erfindung sowohl der Prozess im Verdampfer selbst als auch das daran anschließende Überhitzen des Wasser-Brennstoff-Gemisches zu verstehen. Grundsätzlich wird als Verdampfungsvorgang also der Prozess vor dem Reformbetrieb verstanden, welcher in der Startphase des Reformprozesses stattfindet.

Als Startphase des Reformbetriebes des Systems ist grundsätzlich ein Aufheizbetrieb zu verstehen. Wenn dieser abgeschlossen ist, beginnt ein Reformerbetrieb. Deshalb wird das erfindungsgemäße Verfahren in der Startphase des Reformerbetriebs durchgeführt. Das erfindungsgemäße Verfahren wird insbesondere zur Herstellung von Wasserstoff unter Verwendung von Wasser und einem kohlenstoffhaltigen Brennstoff durchgeführt.

Vorteilhaft ist es, wenn das sauerstoffhaltige Fluid dem Verdampfer oder stromabwärts des Verdampfer einem Überhitzer zugeführt wird. Da die Rußbildung insbesondere erst bei einer Überhitzung des Wasser-Brennstoff-Gemisches, beispielsweise ab 200°C, insbesondere ab 300°C oder mehr, stattfindet, wird das sauerstoffhaltige Fluid bevorzugt erst nach dem Verdampfer zugeführt. Im Rahmen der Erfindung wurde erkannt, dass sich das Wasser-Brennstoff-Gemisch ab etwa 300°C aufspaltet und sich dadurch Ruß bildet, welcher sich dann im Überhitzer, insbesondere an einem Eingang des Überhitzers, absetzt. Die Überhitzung des Wasser-Brennstoff-Gemisches erfolgt in einem Überhitzer, welcher stromabwärts des Verdampfers angeordnet sein kann. Es kann folglich eine Leitung für das sauerstoffhaltige Fluid vorgesehen sein, über welche dieses dem Verdampfungsvorgang und/oder dem Überhitzungsprozess zugeführt wird.

Dabei ist es insbesondere günstig, wenn das sauerstoffhaltige Fluid vor einem Beginn des Verdampfungsvorgangs stromabwärts des Verdampfers einem Überhitzer zugeführt wird. Dadurch ist das sauerstoffhaltige Fluid bereits vor einem Beginn des Verdampfungsvorgangs vor Ort. Ein Zusammenführen des sauerstoffhaltigen Fluids mit dem Wasser-Brennstoff-Gemisch erfolgt jedoch erst, sobald das Wasser-Brennstoff-Gemisch gasförmig ist. Das Wasser-Brennstoff-Gemisch weist dabei insbesondere eine Temperatur von über 100°C, bevorzugt von über 110°C, besonders bevorzugt von etwa 120°C oder mehr auf. Wird das sauerstoffhaltige Fluid dem Wasser-Brennstoff-Gemisch beigemengt, werden die bei der weiteren Überhitzung entstehenden Kohlenstoffteile, insbesondere das sich abgespaltete Kohlenstoffmonoxid, an die Sauerstoffmoleküle gebunden, wodurch eine Rußbildung verhindert wird. Das sauerstoffhaltige Fluid wird dabei direkt dem Überhitzer oder stromaufwärts des Überhitzers und stromabwärts des Verdampfers zugeführt.

Wenngleich das Fluid grundsätzlich in einem beliebigen Aggregatzustand vorliegen kann, ist es günstig, wenn gemäß einer Weiterbildung der vorliegenden Erfindung bei einem Verfahren als sauerstoffhaltiges Fluid ein sauerstoffhaltiges Gas verwendet wird. Ein gasförmiges Fluid kann komprimiert und entsprechend platzsparend im SOFC-verwendet werden. Ein sauerstoffhaltiges Gas kann sich außerdem schnell und effektiv mit dem Wasser-Brennstoff-Gemisch vermengen, sodass eine rasche und effektive Bindung der Kohlenstoffanteile an den Sauerstoff erfolgt, wodurch der erfindungsgemäße Effekt hinsichtlich der Vermeidung der Rußbildung zuverlässig erzielt werden kann. Bei Versuchen im Rahmen der Erfindung hat sich herausgestellt, das als sauerstoffhaltiges Fluid insbesondere Luft geeignet ist, um die gewünschten Effekte hinsichtlich der Vermeidung der Rußbildung zu erzielen. Luft kann für das Verfahren auf einfache und kostengünstige Weise bereitgestellt werden. So kann beispielsweise Luft in Form von Umgebungsluft verwendet werden. Diese kann beispielsweise durch ein Gebläse und ein Luftleitungssystem in den Verdampfer geleitet werden. Alternativ ist es möglich, Luft aus einem Kompressor in den Verdampfer zu leiten. Dies könnte besonders platzsparend realisiert werden. Im Rahmen von Versuchen hat sich darüber hinaus herausgestellt, dass es hinsichtlich der Vermeidung oder Reduzierung der Rußbildung vorteilhaft sein kann, wenn Luft mit Sauerstoff angereichert wird. Dadurch kann die Rußbildung noch gezielter verhindert oder reduziert werden. Besonders vorteilhaft ist die Zuführung von reinem oder annährend reinem Sauerstoff. Da der Stickstoffanteil in Luft die chemischen Prozesse beim erfindungsgemäßen Verfahren nicht beachtlich beeinflusst, ist eine Verwendung von Luft insofern günstig, da Kosten hierbei überschaubar sind.

Zudem ist es möglich, dass bei einem Verfahren gemäß der vorliegenden Erfindung als kohlenstoffhaltiger Brennstoff Ethanol oder Methan verwendet wird. Diese beiden Brennstoffe haben sich bei umfangreichen Versuchen als besonders geeignete Brennstoffe herausgestellt.

Bei einem erfindungsgemäßen Verfahren ist es darüber hinaus möglich, dass das sauerstoffhaltige Fluid dem Verdampfungsvorgang zugeführt wird, sobald sich während des Verdampfungsvorgangs ein Wasser/Brennstoff-Verhältnis, genauer ein Wasserdampf-Kohlenstoff-Verhältnis(steam *to carbon ratio; S*/*C-Rate*), des Wasser-Brennstoff-Gemisches verändert. Damit kann sichergestellt werden, dass die Luftzufuhr oder Vermengung des Wasser-Brennstoff-Verhältnisses mit Luft rechtzeitig, d.h., weder zu spät noch zu früh, erfolgt. Hierzu kann das Wasser-Brennstoff-Verhältnis, insbesondere die S/C-Rate, durch eine geeignete Überwachungsvorrichtung, beispielsweise unter Verwendung einer geeigneten Sensorik, überwacht bzw. kontinuierlich erfasst werden.

Im Rahmen der Erfindung wurde erkannt, dass die S/C-Rate bei einer Verwendung von Ethanol als Brennstoff und bei einem Wasser-Brennstoff-Verhältnis von etwa 55 % zu 45 % in einem Gleichgewicht etwa 1,98 beträgt. Bei einer S/C-Rate ab etwa 1,5 sollte es zu keiner Rußbildung mehr kommen.

Bei einem Verfahren der vorliegenden Erfindung ist es weiterhin möglich, dass während des Verdampfungsvorgangs ein Wasser/Brennstoff-Verhältnis des Wasser-Brennstoff-Gemisches ermittelt wird und anschließend ein Vergleich des ermittelten Wasser/Brennstoff-Verhältnisses mit wenigstens einem Grenzwert durchgeführt wird, wobei das sauerstoffhaltige Fluid während des Verdampfungsvorgangs zugeführt wird, sobald das ermittelte Brennstoff/Wasser-Gemisch über dem wenigstens einen Grenzwert liegt. Bevorzugt wird eine S/C-Rate ermittelt. Der Grenzwert ist außerhalb eines Gleichgewichts der S/C-Rate, welches etwa 1,98 beträgt. Dadurch kann die Rußbildung besonders effizient und zuverlässig verhindert oder reduziert werden.

Bei einer weiteren Ausgestaltungsvariante der vorliegenden Erfindung ist es möglich, dass bei einem Verfahren das Zuführen des sauerstoffhaltigen Fluids zum Verdampfungsvorgang beendet wird, sobald das Wasser/Brennstoff-Verhältnis im Verdampfer ein thermodynamisches Gleichgewicht erreicht. Sobald das Wasser/Brennstoff-Verhältnis, insbesondere die S/C-Rate, ein thermodynamisches Gleichgewicht oder ein chemisches Gleichgewicht erreicht hat, kann das Zuführen des sauerstoffhaltigen Fluids, insbesondere von Luft, beendet werden, da ab diesem Zeitpunkt kein Ruß mehr erzeugt wird. Die entsprechende S/C-Rate ist ab etwa 1,5 erreicht. Hilfsvorrichtungen zum Zuführen der Luft in den Verdampfer können demnach besonders effizient betrieben werden, da sie nur dann in Betrieb sind, wenn auch eine effektive Vermeidung oder Reduzierung der Rußbildung erwartet werden kann. Die Rußbildung tritt insbesondere nur bei einem Startvorgang des Reformierungsprozesses des Brennstoffzellensystems auf. Sobald das Brennstoffzellensystem in vollständigem Betrieb ist, ist genug Wasser im System und somit beim Verdampfungsvorgang, dass die S/C-Rate auch ohne eine Zuführung von Luft im Gleichgewicht bleibt.

Gemäß einem weiteren Aspekt der vorliegenden Erfindung wird ein Computerprogrammprodukt zum Steuern und/oder Regeln eines SOFC-Systems zur Herstellung von Wasserstoff unter Verwendung von Wasser und einem kohlenstoffhaltigen Brennstoff in dem SOFC-System bereitgestellt, wobei das Computerprogrammprodukt zum Ausführen eines wie vorstehend im Detail erläuterten Verfahrens konfiguriert und ausgestaltet ist. Damit bringt ein erfindungsgemäßes Computerprogrammprodukt die gleichen Vorteile mit sich, wie sie ausführlich mit Bezug auf das erfindungsgemäße Verfahren beschrieben worden sind.

Das Computerprogrammprodukt kann als computerlesbarer Anweisungscode in jeder geeigneten Programmiersprache wie beispielsweise in LabVIEW, JAVA, C++ etc. implementiert sein. Das Computerprogrammprodukt kann auf einem computerlesbaren Speichermedium (Datendisk, Wechsellaufwerk, flüchtiger oder nichtflüchtiger Speicher, eingebauter Speicher/Prozessor etc.) abgespeichert sein. Der Anweisungscode kann einen Computer oder andere programmierbare Geräte wie ein Steuergerät für das SOFC-System bzw. des SOFC-Systems derart programmieren, dass die gewünschten Funktionen ausgeführt werden. Ferner kann das Computerprogrammprodukt in einem Netzwerk wie beispielsweise dem Internet bereitgestellt werden bzw. sein, von dem es bei Bedarf von einem Nutzer herunter geladen werden kann. Das Computerprogrammprodukt kann sowohl mittels eines Computerprogramms, d.h. einer Software, als auch mittels einer oder mehrerer spezieller elektronischer Schaltungen, d.h. in Hardware, oder in beliebig hybrider Form, d.h. mittels Software-Komponenten und Hardware-Komponenten, realisiert werden bzw. sein.

Gemäß einem weiteren Aspekt der Erfindung wird ferner ein Speichermittel, insbesondere ein nicht-flüchtiges Speichermittel, mit einem darauf gespeicherten Computerprogrammprodukt, wie es vorstehend beschrieben wurde, zur Verfügung gestellt. Damit bringt auch ein erfindungsgemäßes Speichermittel die vorstehend beschriebenen Vorteile mit sich.

Darüber hinaus wird im Rahmen der vorliegenden Erfindung ein SOFC-System zur Verwendung in einem Kraftfahrzeug zur Verfügung gestellt. Das SOFC-System weist ein wie vorstehend beschriebenes Speichermittel auf, wobei das SOFC-System mittels des Computerprogrammprodukts auf dem Speichermittel zum Durchführen eines wie obenstehend erläuterten Verfahrens konfiguriert und ausgestaltet ist. Und so bringt auch ein erfindungsgemäßes SOFC-System die vorstehend beschriebenen Vorteile mit sich.

Gemäß einer Weiterbildung der Erfindung ist es möglich, dass bei einem SOFC-System am Verdampfer oder stromabwärts des Verdampfers ein erster Fluideinlass zum Zuführen des Wasser-Brennstoff-Gemisches in den Verdampfer und ein zweiter Fluideinlass zum Zuführen des sauerstoffhaltigen Fluids in den Verdampfer ausgestaltet sind. Dadurch wird ermöglicht, dass dem Wasser-Brennstoff-Gemisch auf einfache und zuverlässige Weise das sauerstoffhaltige Fluid zugeführt werden kann und entsprechend die vorstehend erwähnten Vorteile erzielt werden können. Der Fluideinlass ist insbesondere als aktivierbarer Lufteinlass ausgebildet und kann am Verdampfer, stromabwärts des Verdampfers, oder insbesondere stromabwärts des Verdampfers und stromaufwärts eines Überhitzers angeordnet sein. Der Lufteinlass kann als Leitung ausgebildet sein, wobei diese Leitung ein Ventil umfassen kann, über welches eine Dauer und/oder eine Menge der beigemengten Luft steuerbar ist.

Das SOFC-System ist vorzugsweise als ein SOFC-System für den mobilen Einsatz in einem Kraftfahrzeug ausgestaltet. Stromaufwärts zum Verdampfer ist eine Brennstoffquelle, zum Zuführen eines Wasser-Brennstoff-Gemisches in den Verdampfer, angeordnet. Die Brennstoffquelle kann in Form eines Fluidspeichers ausgestaltet sein. Stromabwärts des Verdampfers ist ein Überhitzer, stromabwärts des Überhitzers ein Reformer zur Reformierung bzw. Herstellung von Wasserstoff aus dem verdampften Wasser-Brennstoff-Gemisch angeordnet. Der Überhitzer ist im Rahmen der Erfindung als allgemeine Einrichtung zur Vorkonditionierung des Wasser-Brennstoff-Gemisches für den Reformer ausgebildet und nach dem Verdampfer angeordnet. Beispielsweise kann dieser als Wärmetauscher oder Rohrleitung mit Wärmetausch ausgebildet sein. Stromabwärts des Reformers ist eine Brennstoffzelle, genauer gesagt ein Anodengas-Eingangsabschnitt der Brennstoffzelle, zur Stromerzeugung unter Verwendung des erzeugten Wasserstoffs angeordnet. Stromabwärts der Brennstoffzelle bzw. eines Kathodengas-Ausgangsabschnitts der Brennstoffzelle ist ein Abgasbrenner zum Verbrennen von Abgas der Brennstoffzelle angeordnet. Stromabwärts des Abgasbrenners ist ein Wärmetauscher angeordnet, über welchen Luft, die einem Kathodenabgas-Einlassabschnitt zugeführt wird, erwärmbar ist. Stromabwärts des Wärmetauschers ist wieder der Verdampfer angeordnet, der durch das Abgas der Brennstoffzelle bzw. das Brennstoffzellenabgas ebenfalls erwärmt bzw. erhitzt werden kann. Nach dem Verdampfer kann das Kathodenabgas in die Umgebung des SOFC-Systems ausgelassen werden. Stromaufwärts des Wärmetauschers ist ein Gebläse angeordnet, über welches Umgebungsluft in den Wärmetauscher und von dort weiter in den Kathodengas-Einlassabschnitt der Brennstoffzelle gefördert werden kann. Hierbei sei zu erwähnen, dass das vorstehend beschriebene SOFC-System nur eine bevorzugte Ausführungsform darstellt und die Erfindung nicht darauf beschränkt betrachtet werden soll. Insbesondere kann die Anordnung des Verdampfers und der Wärmetauscher (inkl. des Überhitzers) zueinander variieren. Beispielsweise ist es auch möglich, den Verdampfer und den Überhitzer als eine einzige Komponente auszubilden.

Gemäß einem weiteren Aspekt der vorliegenden Erfindung wird ein Kraftfahrzeug mit wenigstens einem wie vorstehend im Detail beschriebenen SOFC-System zur Bereitstellung elektrischer Energie und wenigstens einer Speichereinheit zur Energieversorgung eines Elektromotors zum Antreiben des Kraftfahrzeugs unter zumindest teilweiser Verwendung der elektrischen Energie, die durch das SOFC-System bereitgestellt wird, zur Verfügung gestellt. Demnach bringt auch ein erfindungsgemäßes Kraftfahrzeug die gleichen Vorteile mit sich, wie sie vorstehend ausführlich beschrieben worden sind. Dier Speichereinheit ist insbesondere als Batterie ausgebildet, in welche vom SOFC-System bereitgestellte Energie eingespeist wird.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder der Zeichnung hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Es zeigen jeweils schematisch:
- Figur 1: ein Flussdiagramm zum Erläutern eines Verfahrens gemäß der vorliegenden Erfindung,
- Figur 2: ein Kraftfahrzeug mit einem SOFC-System, einem Speichermittel sowie einem Computerprogrammprodukt gemäß der vorliegenden Erfindung, und
- Figur 3: ein Blockdiagramm zum Darstellen eines SOFC-System gemäß einer Ausführungsform der vorliegenden Erfindung.

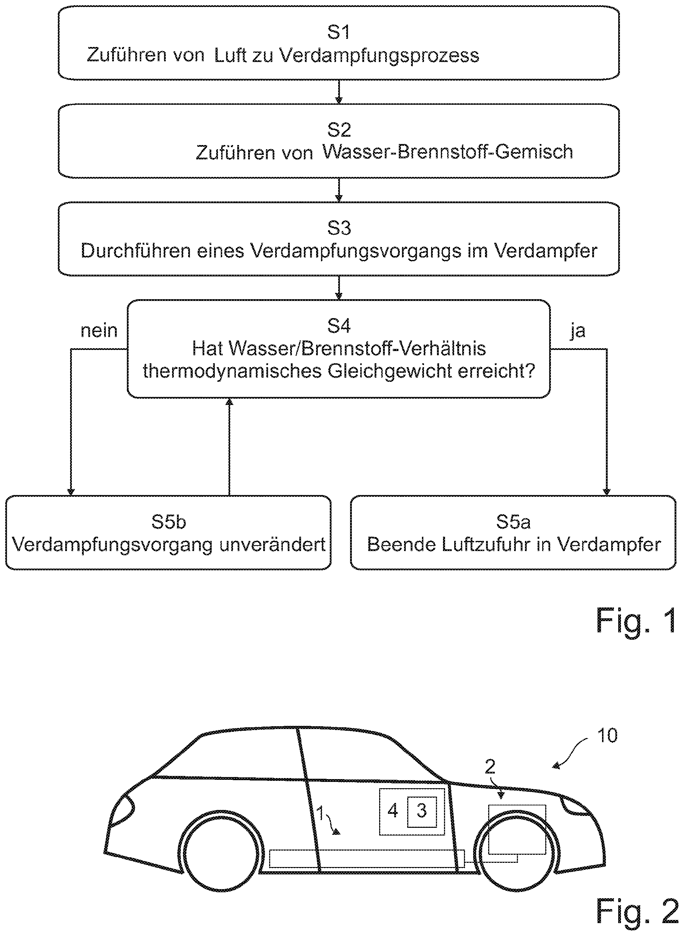

Elemente mit gleicher Funktion und Wirkungsweise sind in den Figuren 1 bis 3 jeweils mit denselben Bezugszeichen versehen.

In Fig. 1 ist ein Flussdiagramm zum Erläutern eines Verfahrens zur Herstellung von Wasserstoff unter Verwendung von Wasser und einem kohlenstoffhaltigen Brennstoff in einem SOFC-System 1 gemäß einer bevorzugten Ausführungsform dargestellt. Bei einem erfindungsgemäßen Verfahren wird in einem ersten Schritt S1 einem Verdampfungsvorgang des SOFC-Systems 1 zunächst ein sauerstoffhaltiges Fluid zugeführt, wobei hierfür Luft verwendet wird.

Anschließend und/oder währenddessen wird einem Verdampfer 5in einem zweiten Schritt S2 ein Wasser-Brennstoff-Gemisch zugeführt, wobei als Brennstoff Ethanol verwendet wird. Das sauerstoffhaltige Fluid wird insbesondere dann zugeführt, wenn sich während des Verdampfungsvorgangs ein Wasser/Brennstoff-Verhältnis des Wasser-Brennstoff-Gemisches verändert, was bei der Startphase des Reformerbetriebs erfolgt. Genauer gesagt kann während des Verdampfungsvorgangs ein Wasser/Brennstoff-Verhältnis des Wasser-Brennstoff-Gemisches mit einer geeigneten Sensorik ermittelt und anschließend wird ein Vergleich des ermittelten Wasser/Brennstoff-Verhältnisses mit wenigstens einem Grenzwert durchgeführt werden, wobei das sauerstoffhaltige Fluid dem Verdampfungsvorgang zugeführt wird, sobald das ermittelte Brennstoff/Wasser-Gemisch über dem wenigstens einen Grenzwert liegt. Beispielsweise kann die Luft dem Verdampfer oder nach einem Verdampfer zugeführt.

In einem dritten Schritt S3 wird das Wasser-Brennstoff-Gemisch zusammen mit der Luft im Verdampfer verdampft. Anschließend bzw. währenddessen wird in einem vierten Schritt S4 ermittelt, ob das Wasser/Brennstoff-Verhältnis ein thermodynamisches Gleichgewicht erreicht hat. Falls dies der Fall ist, wird in einem anschließenden fünften Schritt S5a die Luftzufuhr in den Verdampfer 5 beendet. Wenn dies nicht der Fall ist, wird das Verfahren bzw. der Verdampfungsvorgang gemäß Schritt S5b unverändert weitergeführt, wobei gemäß einer Steuerschleife kontinuierlich geprüft wird, wann das Wasser/Brennstoff-Verhältnis das thermodynamische Gleichgewicht erreicht.

Mit Bezug auf das in Fig. 1 dargestellte Verfahren sei darauf hinzuweisen, dass die Schritte nicht zwangsläufig in der dargestellten Reihenfolge durchgeführt werden müssen. Außerdem ist es nicht erforderlich, alle dargestellten Schritte durchzuführen.

Das in Fig. 1 dargestellte Verfahren ist nur beispielhaft. Insbesondere kann vorgesehen sein, dass die Luft erst stromabwärts des Verdampfers 5 und stromaufwärts eines Überhitzers 13 zugeführt wird. Dann erfolgt der Schritt S2 nach dem Schritt S3, wobei im Schritt S2 (sowie Schritt S5a) Luft nicht dem Verdampfer 5, sondern stromabwärts des Verdampfers 5 zugeführt wird. Gemäß der Erfindung ist unter Verdampfungsvorgang nicht nur das Verdampfen im Verdampfer 5, sondern auch ein Überhitzen im Überhitzer 13 zu verstehen. Es scheint jedoch immer zweckmäßig zu sein, wenn die Luft zeitlich vor dem Wasser-Brennstoff-Gemisch dem Verdampfungsvorgang zugeführt wird.

In Fig. 2 ist ein Kraftfahrzeug 10 mit einem SOFC-System 1 zur Bereitstellung elektrischer Energie und wenigstens einer nicht dargestellten Speichereinheit zur Energieversorgung eines Elektromotor 2 zum Antreiben des Kraftfahrzeugs 10 unter zumindest teilweiser Verwendung der elektrischen Energie, die durch das SOFC-System 1 bereitgestellt wird, dargestellt. Das Kraftfahrzeug 10 weist ferner ein nicht-flüchtiges Speichermittel 4, insbesondere in einem Steuergerät des Kraftfahrzeugs 10 auf, auf welchem ein Computerprogrammprodukt 3 gespeichert bzw. installiert ist.

Das Computerprogrammprodukt 3 ist zum Steuern und/oder Regeln des SOFC-Systems 1 und entsprechend zum Ausführen eines wie vorstehend beschriebenen Verfahrens konfiguriert und ausgestaltet.

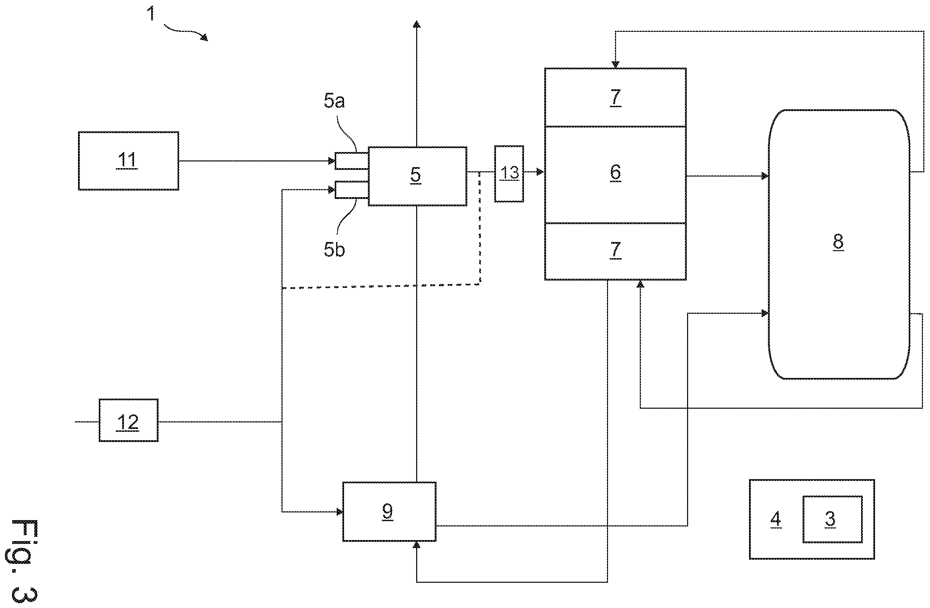

In Fig. 3 ist ein SOFC-System 1 zur Verwendung in einem Kraftfahrzeug 10 dargestellt. Das SOFC-System 1 weist ein Speichermittel 4 auf, wobei das SOFC-System 1 mittels des Computerprogrammprodukts 3 auf dem Speichermittel 4 zum Durchführen eines wie vorstehend beschriebenen Verfahrens konfiguriert und ausgestaltet ist.

Das SOFC-System 1 ist vorliegend als ein SOFC-System 1 für den mobilen Einsatz in einem Kraftfahrzeug 10 ausgestaltet. Das SOFC-System 1 weist einen Verdampfer 5 auf, wobei am Verdampfer 5 ein erster Fluideinlass 5a zum Zuführen eines Wasser-Brennstoff-Gemisches in den Verdampfer 5 und ein zweiter Fluideinlass 5b zum Zuführen eines sauerstoffhaltigen Fluids in den Verdampfer 5 ausgestaltet sind.

Alternativ kann auch vorgesehen sein, dass das sauerstoffhaltige Fluid stromabwärts des Verdampfers 5 und stromaufwärts eines Überhitzers 13 zugeführt wird. Dies ist in Fig. 3 als gestrichelte Linie dargestellt. Dabei ist der zweite Fluideinlass 5b nicht beim Verdampfer 5 angeordnet, sondern kann bei der Luftzuführung nach dem Verdampfer 5 (nicht gezeigt in Fig. 3). Dies kann eine bevorzugte Variante des erfindungsgemäßen Verfahrens sein.

Stromaufwärts zum Verdampfer 5 ist eine Brennstoffquelle 11, zum Zuführen eines Wasser-Brennstoff-Gemisches in den Verdampfer 5, angeordnet. Die Brennstoffquelle 11 kann in Form eines Fluidspeichers ausgestaltet sein. Stromabwärts des Verdampfers ist der Überhitzer 13 und stromabwärts des Überhitzers 13 ein Reformer 6 zur Herstellung von Wasserstoff aus dem verdampften Wasser-Brennstoff-Gemisch angeordnet. Der Überhitzer 13 ist zur weiteren Temperaturerhöhung des Wasser-Brennstoff-Gemisches ausgebildet und kann beispielsweise als Rohrleitung oder Wärmetauscher ausgebildet sein. Stromabwärts des Reformers 6 ist eine Brennstoffzelle 8, genauer gesagt ein Anodengas-Eingangsabschnitt der Brennstoffzelle, zur Stromerzeugung unter Verwendung des erzeugten Wasserstoffs angeordnet. Stromabwärts der Brennstoffzelle 8 bzw. eines Kathodengas-Ausgangsabschnitts der Brennstoffzelle 8 ist ein Abgasbrenner 7 zum Verbrennen von Abgas der Brennstoffzelle 8 angeordnet. Vor einem Zuführen von Abgas zum Abgasbrenner 7 wird das Kathodenabgas mit dem Anodenabgas vermischt.

Stromabwärts des Abgasbrenners 7 ist ein Wärmetauscher 9 angeordnet, über welchen Luft, die einem Kathodenabgas-Einlassabschnitt zugeführt wird, erwärmbar ist. Stromabwärts des Wärmetauschers 9 ist wieder der Verdampfer 5 angeordnet, der durch das Kathodenabgas ebenfalls erwärmt bzw. erhitzt werden kann. Nach dem Verdampfer 5 kann das Kathodenabgas in die Umgebung des SOFC-Systems 1 ausgelassen werden. Stromaufwärts des Wärmetauschers 9 ist ein Gebläse 12 angeordnet, über welches Umgebungsluft in den Wärmetauscher 9 und von dort weiter in den Kathodengas-Einlassabschnitt der Brennstoffzelle 8 gefördert werden kann.

### Bezugszeichenliste

- 1: SOFC-System
- 2: Elektromotor
- 3: Computerprogrammprodukt
- 4: Speichermittel
- 5: Verdampfer
- 5a: erster Fluideinlass
- 5b: zweiter Fluideinlass
- 6: Reformer
- 7: Abgasbrenner
- 8: Brennstoffzelle
- 9: Wärmetauscher
- 10: Kraftfahrzeug
- 11: Brennstoffquelle
- 12: Gebläse
- 13: Überhitzer

## Patentansprüche

1. Verfahren zum Betrieb eines SOFC-Systems (1), aufweisend folgende Schritte, welche bei einer Startphase eines Reformerbetriebs des SOFC-Systems durchgeführt werden:
- Zuführen eines sauerstoffhaltigen Fluids in das SOFC-System,
- Zuführen eines Wasser-Brennstoff-Gemisches in einen Verdampfer (5) des SOFC-Systems,
- Ausführen eines Verdampfungsvorgangs zum Verdampfen des Wasser-Brennstoff-Gemisches, und
- Beimengen eines sauerstoffhaltigen Fluids zum Verdampfungsvorgang sobald das Wasser und der Brennstoff gasförmig sind, **dadurch gekennzeichnet, dass** das sauerstoffhaltige Fluid dem Verdampfungsvorgang zugeführt wird, sobald sich während des Verdampfungsvorgangs ein Wasser/Brennstoff-Verhältnis des Wasser-Brennstoff-Gemisches verändert.

2. Verfahren nach Anspruch 1,
**dadurch gekennzeichnet, dass**
das sauerstoffhaltige Fluid dem Verdampfer (5) oder stromabwärts des Verdampfers (5) einem Überhitzer (13) zugeführt wird.

3. Verfahren nach Anspruch 2,
**dadurch gekennzeichnet, dass**
das sauerstoffhaltige Fluid vor einem Beginn des Verdampfungsvorgangs stromabwärts des Verdampfers (5) dem Überhitzer (13) zugeführt wird.

4. Verfahren nach der voranstehenden Ansprüche,
**dadurch gekennzeichnet, dass**
als sauerstoffhaltiges Fluid ein sauerstoffhaltiges Gas verwendet wird.

5. Verfahren nach einem der voranstehenden Ansprüche,
**dadurch gekennzeichnet, dass**
als sauerstoffhaltiges Fluid Luft verwendet wird.

6. Verfahren nach einem der voranstehenden Ansprüche,
**dadurch gekennzeichnet, dass**
als kohlenstoffhaltiger Brennstoff Ethanol oder Methan verwendet wird.

7. Verfahren nach einem der voranstehenden Ansprüche,
**dadurch gekennzeichnet, dass**
während des Verdampfungsvorgangs ein Wasser/Brennstoff-Verhältnis des Wasser-Brennstoff-Gemisches ermittelt wird und anschließend ein Vergleich des ermittelten Wasser/Brennstoff-Verhältnisses mit wenigstens einem Grenzwert durchgeführt wird, wobei das sauerstoffhaltige Fluid dem Verdampfungsvorgang zugeführt wird, sobald das ermittelte Brennstoff/Wasser-Gemisch über dem wenigstens einen Grenzwert liegt.

8. Verfahren nach einem der voranstehenden Ansprüche,
**dadurch gekennzeichnet, dass**
das Beimengen des sauerstoffhaltigen Fluids zum Verdampfungsvorgang beendet wird, sobald das Wasser/Brennstoff-Verhältnis ein thermodynamisches Gleichgewicht erreicht.

9. Computerprogrammprodukt (3) zum Steuern und/oder Regeln eines SOFC-Systems (1) zur Herstellung von Wasserstoff unter Verwendung von Wasser und einem kohlenstoffhaltigen Brennstoff in dem SOFC-System (1), wobei das Computerprogrammprodukt (3) zum Ausführen eines Verfahrens nach einem der voranstehenden Ansprüche konfiguriert und ausgestaltet ist.

10. Speichermittel (4), insbesondere nicht-flüchtiges Speichermittel (4), mit einem darauf gespeicherten Computerprogrammprodukt (3) nach Anspruch 9.

11. SOFC-System (1) zur Verwendung in einem Kraftfahrzeug (10), aufweisend ein Speichermittel (4) nach Anspruch 10, wobei das SOFC-System (1) mittels des Computerprogrammprodukts (3) auf dem Speichermittel (4) zum Durchführen eines Verfahrens nach einem der Ansprüche 1 bis 8 konfiguriert und ausgestaltet ist.

12. SOFC-System (1) nach Anspruch 11,
**dadurch gekennzeichnet, dass**
am Verdampfer (5) oder stromabwärts des Verdampfers (5) ein erster Fluideinlass (5a) zum Zuführen des Wasser-Brennstoff-Gemisches in den Verdampfer (5) und ein zweiter Fluideinlass (5b) zum Zuführen des sauerstoffhaltigen Fluids zum Verdampfungsvorgang ausgestaltet sind.

13. Kraftfahrzeug (10) mit wenigstens einem SOFC-System (1) gemäß einem der Ansprüche 11 bis 12 zur Bereitstellung elektrischer Energie und wenigstens einer Speichereinheit zur Energieversorgung eines Elektromotors (2) zum Antreiben des Kraftfahrzeugs (10) unter zumindest teilweiser Verwendung der elektrischen Energie, die durch das SOFC-System (1) bereitgestellt wird.

## Claims

1. Method for operating an SOFC system (1), comprising the following steps, which are carried out during a start-up phase of a reformer operation of the SOFC system:
- Feeding a fluid containing oxygen into the SOFC system,
- Feeding a water-fuel mixture into an evaporator (5) of the SOFC system,
- carrying out an evaporation process to evaporate the water-fuel mixture, and
- adding an oxygen-containing fluid to the evaporation process as soon as the water and the fuel are gaseous, **characterised in that** the oxygen-containing fluid is added to the evaporation process as soon as a water/fuel ratio of the water/fuel mixture changes during the evaporation process.

2. Method according to claim 1,
**characterised in that**
the oxygen-containing fluid is fed to the evaporator (5) or downstream of the evaporator (5) to a superheater (13).

3. Method according to claim 2,
**characterised in that**
the oxygen-containing fluid is fed to the superheater (13) downstream of the evaporator (5) before a start of the evaporation process.

4. Method according to any of the preceding claims,
**characterised in that**
an oxygen-containing gas is used as the oxygen-containing fluid.

5. Method according to any of the preceding claims,
**characterised in that**
air is used as the oxygen-containing fluid.

6. Method according to any of the preceding claims,
**characterised in that**
ethanol or methane is used as carbonaceous fuel.

7. Method according to any of the preceding claims,
**characterised in that**
during the evaporation process, a water/fuel ratio of the water/fuel mixture is determined and subsequently a comparison of the determined water/fuel ratio with at least one limit value is carried out, the oxygen-containing fluid being fed to the evaporation process as soon as the determined fuel/water mixture is above the at least one limit value.

8. Method according to any of the preceding claims,
**characterised in that**
the addition of the oxygen-containing fluid to the evaporation process is terminated as soon as the water/fuel ratio reaches thermodynamic equilibrium.

9. Computer program product (3) for controlling and/or regulating an SOFC system (1) for producing hydrogen using water and a carbonaceous fuel in the SOFC system (1), wherein the computer program product (3) is configured and arranged for carrying out a method according to any one of the preceding claims.

10. Memory means (4), in particular non-volatile memory means (4), having a computer program product (3) stored thereon according to claim 9.

11. SOFC system (1) for use in a motor vehicle (10), comprising a memory means (4) according to claim 10, wherein the SOFC system (1) is configured and arranged by means of the computer program product (3) on the memory means (4) for performing a method according to any of claims 1 to 8.

12. SOFC system (1) according to claim 11,
**characterised in that**
at the evaporator (5) or downstream of the evaporator (5), a first fluid inlet (5a) for supplying the water-fuel mixture into the evaporator (5) and a second fluid inlet (5b) for supplying the oxygen-containing fluid for the evaporation process are provided.

13. Motor vehicle (10) with at least one SOFC system (1) according to any one of claims 11 to 12 for providing electrical energy and at least one storage unit for supplying energy to an electric motor (2) for driving the motor vehicle (10) using at least part of the electrical energy provided by the SOFC system (1).

## Revendications

1. Procédé de fonctionnement d'un système SOFC (1), comprenant les étapes suivantes, qui sont exécutées lors d'une phase de démarrage d'une opération de reformage du système SOFC :
- l'introduction d'un fluide contenant de l'oxygène dans le système SOFC,
- l'introduction d'un mélange eau-combustible dans un évaporateur (5) du système SOFC,
- la réalisation d'une opération d'évaporation pour vaporiser le mélange eau-combustible, et
- l'ajout d'un fluide contenant de l'oxygène à l'opération d'évaporation dès que l'eau et le combustible sont à l'état gazeux, **caractérisé en ce que** le fluide contenant de l'oxygène est ajouté à l'opérationd'évaporation dès qu'un rapport eau/combustible du mélange eau/combustible se modifie pendant l'opération d'évaporation.

2. Procédé selon la revendication 1
**caractérisé en ce que**
le fluide contenant de l'oxygène est acheminé vers l'évaporateur (5) ou, en aval de l'évaporateur (5), vers un surchauffeur (13).

3. Procédé selon la revendication 2
**caractérisé en ce que**
le fluide contenant de l'oxygène est acheminé vers le surchauffeur (13) avant un début de l'opération d'évaporation en aval de l'évaporateur (5).

4. Procédé selon les revendications précédentes
**caractérisé en ce que**
un gaz contenant de l'oxygène est utilisé comme fluide contenant de l'oxygène.

5. Procédé selon l'une quelconque des revendications précédentes
**caractérisé en ce que**
le fluide oxygéné utilisé est l'air.

6. Procédé selon l'une quelconque des revendications précédentes
**caractérisé en ce que**
le combustible carboné utilisé est l'éthanol ou le méthane.

7. Procédé selon l'une quelconque des revendications précédentes
**caractérisé en ce que**
pendant l'opération d'évaporation, un rapport eau/combustible du mélange eau/combustible est déterminé et ensuite une comparaison du rapport eau/combustible déterminé est effectuée avec au moins une valeur limite, le fluide contenant de l'oxygène étant acheminé vers l'opération d'évaporation dès que le mélange combustible/eau déterminé est supérieur à ladite au moins une valeur limite.

8. Procédé selon l'une quelconque des revendications précédentes
**caractérisé en ce que**
l'ajout du fluide contenant de l'oxygène à l'opération d'évaporation est arrêté dès que le rapport eau/combustible atteint un équilibre thermodynamique.

9. Produit de programme informatique (3) destiné à commander et/ou contrôler un système SOFC (1) pour la production d'hydrogène en utilisant de l'eau et un combustible carboné dans le système SOFC (1), le produit de programme informatique (3) étant configuré et conçu pour mettre en œuvre un procédé selon l'une quelconque des revendications précédentes.

10. Moyen de stockage (4), en particulier moyen de stockage non volatile (4), avec un produit de programme informatique (3) stocké sur celui-ci selon la revendication 9.

11. Système SOFC (1) destiné à être utilisé dans un véhicule automobile (10), comprenant un moyen de stockage (4) selon la revendication 10, dans lequel le système SOFC (1) est configuré et conçu au moyen du produit programme informatique (3) sur le moyen de stockage (4) pour mettre en œuvre un procédé selon l'une quelconque des revendications 1 à 8.

12. Système SOFC (1) selon la revendication 11, **caractérisé en ce que**
au niveau de l'évaporateur (5) ou en aval de l'évaporateur (5), une première entrée de fluide (5a) est conçue pour acheminer le mélange eau-combustible dans l'évaporateur (5) et une deuxième entrée de fluide (5b) est conçue pour acheminer le fluide contenant de l'oxygène pour l'opération d'évaporation.

13. Véhicule automobile (10) comprenant au moins un système SOFC (1) selon l'une quelconque des revendications 11 à 12 pour fournir de l'énergie électrique et au moins une unité de stockage pour alimenter un moteur électrique (2) pour entraîner le véhicule automobile (10) en utilisant au moins partiellement l'énergie électrique fournie par le système SOFC (1).
